# EUROPÄISCHE PATENTSCHRIFT

(11) **EP 3 268 149 B1**
(45) Veröffentlichungstag und Bekanntmachung des Hinweises auf die Patenterteilung: **30.01.2019**
(21) Anmeldenummer: 17727527.8
(22) Anmeldetag: 23.05.2017
(51) Int. Cl.: B22D 2/00, B22D 11/18, B22D 23/10, C22B 9/18, B22D 11/20, G01K 13/02, F27D 19/00, F27D 21/00, F27B 3/08

(54) **ELEKTRO SCHLACKE UMSCHMELZVERFAHREN UND SCHMELZGEFÄSS**
ELECTROSLAG REMELTING PROCESS AND MELTING VESSEL
PROCÉDÉ DE FUSION SOUS LAITIER ÉLECTROCONDUCTEUR ET RÉCIPIENT DE FUSION

(30) Priorität: 25.05.2016 DE 102016109712
(43) Veröffentlichungstag der Anmeldung: 17.01.2018
(73) Patentinhaber: Ald Vacuum Technologies GmbH, 63457 Hanau (DE)
(72) Erfinder: FRANZ, Henrik, 63579 Freigericht-Horbach (DE); BIEBRICHER, Ulrich, 61194 Niddatal (DE); SCHOLZ, Harald, 63517 Rodenbach (DE)
(74) Vertreter: Fuchs Patentanwälte Partnerschaft mbB
(86) Internationale Anmeldenummer: PCT/EP2017/062450
(87) Internationale Veröffentlichungsnummer: WO 2017/202857

(56) Entgegenhaltungen:
- DE-A1- 19 956 577
- DE-A1-102011 114 556
- JP-A- S6 372 837

## Beschreibung

Die Erfindung betrifft ein Umschmelzverfahren für Metalle und Metalllegierungen. Sie betrifft auch ein geeignetes Schmelzgefäß, insbesondere eine Kokille, und Verwendungen dieses Schmelzgefäßes.

Um hochreine Materialien zu erhalten, werden Körper, die aus diesem Material bestehen, umgeschmolzen. Ein bekanntes Umschmelzverfahren ist das so genannte Elektro-Schlacke-Umschmelzverfahren. Bei diesem Umschmelzverfahren wird in der Regel ein Schmelzgefäß vorgesehen, in dem eine Schmelzelektrode umgeschmolzen wird. Das Umschmelzen der Elektrode erfolgt durch Stromfluss durch die Elektrode, wobei normalerweise sehr hohe Ströme bei relativ niedrigen Spannungen fließen. Um einen elektrolytischen Effekt zu vermeiden, der bei Gleichstrom auftreten kann, wird in der Regel Wechselstrom verwendet. Beim Elektro-Schlacke-Umschmelzen dient die Schlacke als Heizelement und Raffinationsbad. Der Strom fließt über die Elektrode durch die Schlackenzone und den Ingot. Aufgrund des Widerstands der Schlacke heizt diese die Spitze der Elektrode auf und schmilzt sie. Die resultierenden Tropfen von geschmolzenem Metall oder Metalllegierung werden raffiniert während sie durch die Schlackenzone hindurch treten. Die Spitze der Elektrode ist in die Schlackenzone eingetaucht. Die Schlackenzone schwimmt auf geschmolzenem Metall bzw. Metalllegierung. Die Schlackenzone sorgt somit auch für einen Abschluss des flüssigen Metalls gegenüber der umgebenden Atmosphäre. Als Schlacken werden üblicherweise Mischungen aus Calciumfluorid, Calciumoxid und Aluminiumoxid verwendet. Es können aber auch reine Mischungen aus Calciumoxid, Magnesiumoxid, Aluminiumoxid oder Siliciumdioxid verwendet werden. Die Schlacke muss einen niedrigen Schmelzpunkt, eine hohe Stabilität, eine geringe Flüchtigkeit und eine gute Reaktivität im Hinblick auf die Raffination aufweisen. Verunreinigungen in dem Material der Elektrode werden sowohl durch Lösung in der Schlacke als auch durch chemische Reaktion mit der Schlacke entfernt.

Bei Elektro-Schlacke-Umschmelzprozessen, in denen der Ingot aus einem geöffneten Schmelzgefäß heraus abgezogen wird beziehungsweise das Schmelzgefäß nach oben bewegt wird, ist es von entscheidender Bedeutung, dass die Position der Grenzfläche zwischen Schlacke und Ingot (bzw. zwischen Schlacke und flüssigem Metall) relativ zur Kokille im Verlauf des Prozesses nahezu konstant gehalten wird, unter anderem um eine thermische Überlastung bzw. Beschädigung der Anlage zu vermeiden. Dabei besteht die Herausforderung darin, den Volumenaufbau am Ingot, der durch die Schmelzrate bestimmt wird, in entsprechender Weise durch die Abzugsgeschwindigkeit des Ingots beziehungsweise durch die Hubgeschwindigkeit der Kokille zu kompensieren. Aufgrund der unterschiedlichen (teilweise unbestimmten) Dichte des Schmelzmaterials im Bereich der Elektrode und des Ingots weisen einfache Volumenberechnungen aus der Schmelzrate eine ungenügende Genauigkeit auf, die in letzter Konsequenz zu Drifteffekten führen kann. Für Prozess- und Betriebssicherheit sind die zuverlässige Bestimmung und Kontrolle der Positionen von entscheidender Bedeutung. Andernfalls besteht die Gefahr, dass es zu Ausläufern von Schlacke (wenn Position zu tief in dem Schmelzgefäß) oder aber zum Schlackeüberlauf kommt (wenn Position zu hoch in dem Schmelzgefäß).

Das Elektro-Schlacke-Umschmelz-Verfahren unterscheidet sich unter anderem dadurch wesentlich von anderen Prozessen, wie etwa dem Stranggießen, dass beim Elektro-Schlacke-Umschmelzen nicht nur zwei Grenzflächen zwischen Ingot und Metallschmelze sowie zwischen Schmelze und Gasphase vorhanden sind, sondern drei Grenzflächen: Ingot/Metallschmelze, Metallschmelze/Schlacke und Schlacke/Gasphase. Dabei genügt es für die Prozesskontrolle nicht, die Position einer der drei Grenzflächen zu ermitteln, da die Höhe der Schlackenzone nicht konstant ist. Vielmehr wird kontinuierlich Schlacke aus der Schlackenzone unter Bildung einer Schlackenhaut auf dem hergestellten Ingot abgeführt. Darüber hinaus ist auch die Höhe der Metallschmelze nicht konstant. Somit ist die Bestimmung der Position und Höhe der Schlackenzone beim Elektro-Schlacke-Umschmelzen äußerst komplex und insbesondere wesentlich komplexer als in Verfahren mit nur zwei Grenzflächen.

Zur Überwindung des Problems werden verschiedene Lösungen angewendet, die im Wesentlichen auf einer Überwachung des Schlackespiegels während des Umschmelzprozesses beruhen. Dabei kommen sowohl optische Messmethoden als auch radarbasierte Abstandsmessungen zum Einsatz. EP 2 386 366 A2 offenbart eine radarbasierte Messung des Schlackenspiegels. Die in früheren Zeiten genutzte Abstandsmessung unter Verwendung von Isotopenstrahlungen ist nicht mehr zeitgemäß.

Neben den Schwierigkeiten, die sich aus der volumetrischen Berechnung ergeben, wird die Positionsbestimmung noch durch den Umstand erschwert, dass permanent eine Schicht am Ingot erstarrter Schlacke aus dem System abgezogen wird und sich in Konsequenz die Masse (bzw. Höhe) der Schlacke im Prozessverlauf ändern kann. Mit den aus dem Stand der Technik bekannten Verfahren lässt sich direkt nur die Position der Oberfläche der Schlackenzone, nicht aber deren Ausdehnung, also deren Höhe in dem Schmelzgefäß ermitteln.

Eine visuelle Kontrolle des Schlackenniveaus ist während des Verfahrens nicht ohne weiteres möglich, da normalerweise mit geschlossenen Anlagen gearbeitet wird, das Schmelzgefäß also mit einer Haube geschlossen ist. Eine kontinuierliche visuelle Überwachung des Schlackenniveaus wäre ohnehin nicht praktikabel, da es zu einer starken Rauchentwicklung kommt, so dass abrupte Änderungen des Schlackenniveaus nicht unmittelbar bemerkt würden. Bei geschlossenen Anlagen tritt aufgrund des verringerten Gasaustauschs eine stärkere Staubentwicklung statt. Videosysteme, die im Stand der Technik mitunter eingesetzt wurden, neigten aufgrund der Staub- und Rauchentwicklung zu Fehlmessungen; zudem lassen der Blickwinkel der Kamera und die Temperaturen an der Innenwand eine eindeutige Bestimmung nicht zu. Ferner kann es sinnvoll sein, die Schlackenzone innerhalb bestimmter Grenzen schwanken zu lassen, um die Lebensdauer der Kokille zu erhöhen. Dies erfordert eine besonders sorgsame und kontinuierliche Bestimmung des Schlackenniveaus und kann aus dem Wärmefluss über die Gefäßwand bestimmt werden.

JP S63-72837 A beschreibt ein Verfahren zum Elektro-Schlacke-Umschmelzen, bei dem in einer Kokillenwand die Temperatur über die Höhe der Kokille gemessen wird. Daraus sollen Rückschlüsse über die Höhe und Position der Schlackenzone gezogen werden. Dieses Verfahren hat sich allerdings in der Praxis als nicht praktikabel erwiesen, da bei Verwendung nur einer Messgruppe lediglich eine Temperaturmessung stattfindet und keine Wärmebilanz erstellt werden kann. Im Unterschied zu einer bloßen Temperaturmessung kann mit Hilfe der Wärmebilanz allerdings eine viel genauere und zutreffendere Bestimmung der Lage der Schlackenzone erfolgen. Dafür sind mindestens zwei Messgruppen erforderlich, wie es hier erfindungsgemäß vorgesehen ist. Figur 3 in JP S63-72837 A zeigt ferner anschaulich, dass die Dicke der Schlackenhaut einen erheblichen Einfluss auf die Temperaturmessung hat.

Der Erfindung liegt die Aufgabe zugrunde, ein möglichst einfaches und apparativ wenig aufwendiges Verfahren bereit zu stellen, mit dem die Position und die Ausdehnung (Höhe) der Schlackenzone in einem Schmelzgefäß während eines Elektro-Schlacke-Umschmelzverfahrens bestimmt werden kann. Ferner besteht ein Bedarf an einem für solch ein Verfahren nutzbaren Schmelzgefäß.

Die Aufgabe wird durch die Gegenstände der Patentansprüche gelöst.

Erfindungsgemäß ist ein Schmelzgefäß zum Elektro-Schlacke-Umschmelzen von Metallen oder Metalllegierungen mit wenigstens einer Innenwand und einem durch die Innenwand begrenzten Schmelzraum, so dass eine Grenzfläche zwischen Innenwand und Schmelzraum vorhanden ist. Das Schmelzgefäß ist dadurch gekennzeichnet, dass es Messeinrichtungen zum Messen der Temperatur aufweist und die Messeinrichtungen in wenigstens zwei Messgruppen angeordnet sind, wobei die Messeinrichtungen innerhalb einer Messgruppe einen im Wesentlichen gleichen Abstand zur Grenzfläche zwischen Innenwand und Schmelzraum aufweisen und sich der genannte Abstand zwischen den Messeinrichtungen verschiedener Messgruppen unterscheidet und Messeinrichtungen innerhalb einer Messgruppe in unterschiedlicher Höhe über die Kokille angeordnet sind. Das Schmelzgefäß ist insbesondere eine Kokille, vorzugsweise eine Kokille, die während des Verfahrens nicht oszilliert, bevorzugt also ortsfest ist bzw. im Verfahren nicht bewegt wird. Dies ist besonders bevorzugt, wenn auf dem Schmelzgefäß - wie erfindungsgemäß ebenfalls bevorzugt - eine Haube angeordnet ist.

Die Schlackenzone weist im Elektro-Schlacke-Umschmelzverfahren im Vergleich zu Elektrode, flüssigem Metall und Ingot die höchste Temperatur auf. Vermittelt durch ein Kühlmittel wird während des Verfahrens Wärme abgeführt. Der Erfindung liegt die Erkenntnis zu Grunde, dass die Detektion des höchstens Wärmeflusses in dem Schmelzgefäß zur Bestimmung der Position und Ausdehnung der Schlackenzone in dem Schmelzgefäß nutzbar ist.

In bevorzugten Ausgestaltungen ist das Schmelzgefäß kühlmittelgekühlt, insbesondere wassergekühlt. Vorzugsweise weist das erfindungsgemäße Schmelzgefäß eine Außenwand und einen zwischen Außenwand und Innenwand verlaufenden Kühlmittelkanal auf.

Die Messeinrichtungen zum Messen der Temperatur sind vorzugsweise in der Innenwand des Schmelzgefäßes angeordnet. Insbesondere sind die Messeinrichtungen in der Innenwand angeordnet, um sie nicht den aggressiven Bedingungen in Schmelzraum des Schmelzgefäßes auszusetzen. Dennoch sollten die Messeinrichtungen möglichst nah am Schmelzraum angeordnet sein, um eine möglichst zuverlässige Messung der Temperatur zu ermöglichen. Die Innenwand hat eine Grenzfläche zum Schmelzraum und vorzugsweise eine Grenzfläche zum Kühlmittelkanal.

Die Messeinrichtungen sind vorzugsweise Thermoelemente. Thermoelemente sind deswegen besonders geeignet, weil sie die kontinuierliche Messung über einen weiten Temperaturbereich ermöglichen.

Es ist vorteilhaft, wenn diejenige Messgruppe, die im Vergleich zu anderen Messgruppen den geringsten Abstand zu der Grenzfläche Innenwand/Schmelzraum aufweist, in etwa in der Mitte der Innenwand, insbesondere in der Mitte zwischen Innenwand und Kühlmittelkanal, angeordnet ist. Jede weitere Messgruppe weist dann entsprechend einen größeren Abstand zu der Grenzfläche auf. Grund für die Anordnung der Messeinrichtungen mit genügendem Abstand zur Grenzfläche ist unter anderem die Vermeidung von Beschädigungen an den Messeinrichtungen bei der Nacharbeitung der Kokille. Ferner soll ein zu großer Einfluss des Kühlkanals auf die Messergebnisse vermieden werden. Vorzugsweise beträgt der Abstand der Messeinrichtungen zum Kühlmittelkanal wenigstens 5 mm, besonders bevorzugt wenigstens 10 mm. In einer besonders bevorzugten Ausführungsform ist der Abstand der Messeinrichtungen zum Kühlmittelkanal größer als der Abstand zu der nächsten Messeinrichtung einer anderen Messgruppe.

Vorzugsweise sind die Messeinrichtungen mit einem Abstand von wenigstens 5 mm, insbesondere wenigstens 10 mm, zu der Grenzfläche zwischen Innenwand und Schmelzraum angeordnet. Es hat sich gezeigt, dass dieser Abstand einerseits die Messeinrichtungen nicht beeinträchtigt und andererseits für eine hohe Aussagekraft der Messungen nützlich ist. Mit dem Abstand ist in diesem Fall insbesondere der Abstand in horizontaler Richtung gemeint. Bei zu großem Abstand der Messeinrichtungen von dem Schmelzraum wird die Aussagekraft der Messergebnisse beeinträchtigt.

Vorzugsweise ist der Abstand von benachbarten Messeinrichtungen untereinander innerhalb einer Messgruppe dort minimal, wo im Betrieb des Schmelzgefäßes die Schlackenzone angeordnet ist. Insbesondere nimmt der Abstand zwischen jeweils benachbarten Messeinrichtungen mit zunehmenden Abstand zur (erwarteten) Schlackenzone zu. Die Schlackenzone liegt erfindungsgemäß bevorzugt in einem Abstand von 100 bis 600 mm, vorzugsweise 200 bis 400 mm, bevorzugt etwa 300 mm unterhalb der oberen Schmelzgefäßkante. Mit einer solchen Anordnung wird eine möglichst genaue Messung im relevanten Bereich erreicht, also dort, wo die Schlackenzone liegen soll. In einer alternativen Ausführungsform weisen benachbarte Messeinrichtungen innerhalb einer Messgruppe im Wesentlichen jeweils gleiche Abstände zueinander auf.

In einer weiteren alternativen Ausgestaltung ist der Abstand von benachbarten Messeinrichtungen innerhalb einer Messgruppe dort maximal, wo im Betrieb des Schmelzgefäßes die Schlackenzone angeordnet ist. Insbesondere nimmt der Abstand zwischen jeweils benachbarten Messeinrichtungen mit zunehmenden Abstand zur (erwarteten) Schlackenzone ab. In einer besonders bevorzugten Ausführungsform sind die Abstände der Messeinrichtungen untereinander innerhalb einer Messgruppe dort minimal, wo im Betrieb die Grenzflächen Schlacke/Metallbad und Schlacke/Gasphase erwartet werden. Dies trägt der Tatsache Rechnung, dass Veränderungen in der Höhe oder Position der Schlackenzone insbesondere im Grenzbereich Schlacke/Metall bzw. Schlacke/Gas gemessen werden sollen.

Vorzugsweise ist zu jeder Messeinrichtung einer Messgruppe eine korrespondierende Messeinrichtung einer anderen Messgruppe auf der gleichen Höhe vorgesehen. Dadurch stehen auf einer Höhe mehrere Messeinrichtungen zur Verfügung, die sich im Hinblick auf ihren Abstand zur Grenzfläche zwischen Innenwand und Schmelzraum, nicht jedoch im Hinblick auf ihre Höhe unterscheiden.

Vorzugsweise beträgt der Abstand zwischen benachbarten Messeinrichtungen innerhalb einer Messgruppe wenigstens 5 mm und mehr bevorzugt wenigstens 10 mm oder wenigstens 30 mm. Eine Unterschreitung dieses Mindestabstands erhöht die Kosten des Schmelzgefäßes, ohne die Qualität der Messergebnisse nennenswert zu verbessern. Der Abstand zwischen benachbarten Messeinrichtungen einer Messgruppe sollte höchstens 100 mm betragen. Dieser Abstand ist insbesondere der vertikale Abstand zwischen Messeinrichtungen. Die Messeinrichtungen innerhalb einer Messgruppe sind vorzugsweise in einer im Wesentlichen vertikalen Reihe angeordnet. Sie können aber auch anders, insbesondere spiralförmig um den Schmelzraum angeordnet sein.

Die Dicke der Innenwand beträgt vorzugsweise wenigstens 15 mm, insbesondere wenigstens 25 mm. Eine gewisse Wandstärke sollte nicht unterschritten werden, um nicht die Stabilität des Schmelzgefäßes zu beeinträchtigen. Die Innenwand besteht vorzugsweise aus Metall, insbesondere aus Kupfer oder Kupferlegierungen. Auch andere Metalle, insbesondere Stahl, sind denkbar aber weniger bevorzugt.

Das Schmelzgefäß ist insbesondere eine Kokille und kann je nach gewünschter Form des hergestellten Ingots verschiedene Querschnittsformen haben. Die Form der Ingots ist wie die Form des Schmelzgefäßes für die Funktion der Erfindung nicht entscheidend. Das Schmelzgefäß kann in alternativen Ausführungsformen ein Tiegel sein, etwa wie in DE 42 07 694 A1. In dem Fall erfolgt die Formgebung nicht in dem Schmelzgefäß, sondern in einer separaten Kokille. An die Stelle des Abziehens des Ingots tritt dann der Verfahrensschritt des Ablassens des flüssigen Metalls bzw. der flüssigen Metalllegierung.

Die Messeinrichtungen sind in zwei oder mehr Messgruppen angeordnet. Verschiedene Messeinrichtungen gehören einer Messgruppe an, wenn sie einen im Wesentlichen gleichen Abstand zur Grenzfläche zwischen Innenwand und Schmelzraum aufweisen. Gemeint ist insbesondere der horizontale Abstand zu der genannten Grenzfläche. Vorzugsweise weist das Schmelzgefäß der Erfindung wenigstens zwei Messgruppen auf. Vorzugsweise hat eine erste Messgruppe einen Abstand A zu der Grenzfläche zwischen Innenwand und Schmelzraum, der kleiner ist als der Abstand A+C einer zweiten Messgruppe zu derselben Grenzfläche. Vorzugsweise beträgt ein horizontaler Abstand C zwischen den Messeinrichtungen einer ersten Messgruppe zu den Messeinrichtungen einer zweiten Messgruppe wenigstens 3 mm, insbesondere wenigstens 5 mm. Die Messeinrichtungen einer Messgruppe sind vorzugsweise in einer vertikalen Reihe parallel zur Grenzfläche zwischen Innenwand und Schmelzraum angeordnet.

Mithilfe der Messeinrichtungen in dem Schmelzgefäß dieser Erfindung werden die Temperaturen während des Prozesses, insbesondere kontinuierlich, überwacht und aus dem gemessenen Temperaturprofil eine Wärmebilanz erstellt. Aus der Wärmebilanz werden Rückschlüsse auf die Position der Schlackenzone in dem Schmelzgefäß gezogen. Die Platzierung einer Mehrzahl von Messeinrichtungen über den relevanten Bereich des Schmelzgefäßes liefert ein integrales Temperaturprofil, insbesondere innerhalb der Innenwand. Aus der Wärmebilanz lässt sich ein Maximum bestimmen, das in Korrelation zur Schlackenposition steht.

Bei geeigneter Anordnung der Messeinrichtungen ist eine fortlaufende Positionsbestimmung der Schlackenzone und, in Kombination mit geometrischen Berechnungen und unter Berücksichtigung der Schmelzrate, eine zuverlässige Bestimmung der einzustellenden Ingot-Abzugsgeschwindigkeit bzw. Schmelzgefäßhebegeschwindigkeit möglich.

Bei erfindungsgemäßer Verwendung von mehreren Messgruppen, die sich in unterschiedlicher Tiefe in der Innenwand befinden, ergibt sich die Möglichkeit, mehrere Temperaturprofile gleichzeitig aufzunehmen. Unter Berücksichtigung der bekannten Wärmeleitfähigkeit des Materials des Schmelzgefäßes kann auf diese Weise der lokale Wärmetransport bzw. die Wärmestromdichte durch das Schmelzgefäß bestimmt werden. Die mit diesem Verfahren ermittelte Wärmebilanz liefert eine verbesserte Positionsbeschreibung der Schlackenzone im Vergleich zu einfachen Temperaturprofilen und erlaubt weitere Rückschlüsse auf die Prozessführung, die mit den bisher beschriebenen Messverfahren nicht oder nur bedingt erzielt werden konnten.

Mit der lokalen Wärmebilanz kann die Zone erhöhten Wärmeeintrages in der Kokille während des Prozesses detaillierter erfasst und überwacht werden, als dies mit einem einfachen Temperaturprofil möglich ist. Damit sind direkte Rückschlüsse auf Betriebszustände des Prozesses (z.B. Schlackentemperatur, Höhe der Schlackenzone) möglich, die mit anderen Methoden nicht oder nur sehr eingeschränkt erzielt werden können. Gleichzeitig kann die Extrapolation des ermittelten Leistungsprofils in der Kokille zur Bestimmung der aktuellen Randbedingungen der Wärmeübertragung an den Grenzflächen der Kokille zum Schmelzraum und ggf. am Kühlkanal genutzt werden. Auf diese Weise können kritische Betriebszustände (z.B. Blasensieden) und auftretende Anomalitäten in der Prozessführung wirkungsvoll identifiziert werden. Zusätzlich liefert diese Messmethode Daten, die direkt zur Verifikation von Prozessmodellen und - simulationen genutzt werden können. Damit wird in Konsequenz eine modellbasierte Prozessführung ermöglicht. Vorzugsweise wird während des Verfahrens, insbesondere kontinuierlich, die Wärmebilanz ermittelt. Abhängig von der Wärmebilanz kann insbesondere die Eintauchtiefe der Elektrode und/oder die Menge der Schlackendosierung angepasst werden.

Das Schmelzgefäß weist vorzugsweise wenigstens zwei Messeinrichtungen, weiter bevorzugt wenigstens drei Messeinrichtungen, mehr bevorzugt wenigstens vier Messeinrichtungen und besonders bevorzugt wenigstens sechs Messeinrichtungen auf. Es hat sich gezeigt, dass mit einer nicht zu geringen Anzahl an Messeinrichtungen eine gute Positionsbestimmung der Schlackenzone innerhalb des Schmelzgefäßes möglich ist. Mit steigender Anzahl an Messeinrichtungen steigt die Aussagekraft und Genauigkeit der ermittelten Daten, aber auch die Herstellungskosten des Schmelzgefäßes. Vorzugsweise weist das Schmelzgefäß höchstens 100 Messeinrichtungen, insbesondere höchstens 60 Messeinrichtungen und bevorzugt höchstens 40 oder höchstens 25 Messeinrichtungen auf. Jede Messgruppe weist vorzugsweise wenigstens zwei, insbesondere wenigstens drei, wenigstens vier oder wenigstens fünf, bevorzugt wenigstens sechs Messeinrichtungen oder wenigstens acht Messeinrichtungen auf. Vorzugsweise sollte die Zahl der Messeinrichtungen pro Messgruppe nicht mehr als 25, insbesondere nicht mehr als 18 und besonders bevorzugt nicht mehr als 14 betragen. Die Verwendung einer sehr hohen Anzahl an Messeinrichtungen erhöht die Kosten der Anlage und die Komplexität des Betriebs, ohne wesentliche Vorteile hinsichtlich der Aussagekraft der Messung zu liefern.

Da sich die Messeinrichtungen in einem stromführenden Schmelzgefäß befinden, sind sie vorzugsweise elektrisch isoliert. Vorzugsweise werden die Messeinrichtungen, insbesondere aus Richtung des Kühlmittelkanals in Bohrungen, in die Innenwand geklebt. Die elektrische Isolation erfolgt vorzugsweise über den verwendeten Kleber. Der Kleber verhindert auch den Eintritt von Kühlmittel in die Bohrung.

Erfindungsgemäß ist auch ein Verfahren zum Elektro-Schlacke-Umschmelzen von Metallen oder Metalllegierungen mit den Schritten:
A. Bereitstellen wenigstens einer Elektrode des zu schmelzenden Metalls oder der zu schmelzenden Metalllegierung in einem Schmelzgefäß dieser Erfindung,
B. Bereitstellen von Schlacke in dem Schmelzgefäß,
C. Schmelzen der Elektrode, so dass das geschmolzene Metall bzw. die geschmolzene Metalllegierung durch eine Schlackenzone hindurch tritt und zu einem Ingot erstarrt,
wobei mit Hilfe der über die Messeinrichtungen gewonnenen Informationen, insbesondere kontinuierlich, eine Wärmebilanz erstellt. Vorzugsweise wird während des Schmelzens die Position der Schlackenzone, insbesondere auch deren Höhe, im Schmelzgefäß über Messeinrichtungen und der daraus ermittelten Wärmeverteilung im Schmelzgefäß ermittelt.

Es ist ein besonderer Vorteil des erfindungsgemäßen Verfahrens und des erfindungsgemäßen Schmelzgefäßes, dass über die Temperaturmessung mithilfe der Messeinrichtungen nicht nur eine Aussage über die Position der Schlackenzone möglich ist, sondern auch deren Ausdehnung in Höhenrichtung zuverlässig bestimmt werden kann. Zusätzlich kann die Wärmeverteilung in der Kokille visualisiert und zur Berücksichtigung der Position der Schlackenhöhe im Schmelzgefäß Verwendung finden. Da es Ausführungsformen gibt, in denen während des Prozesses laufend Schlackebestandteile über den abgezogenen Ingot entfernt werden, ist es sinnvoll, die Menge an vorhandener Schlacke bestimmen zu können. Diese Möglichkeit ist besonders vorteilhaft in Verfahren, bei denen der Ingot während des Schmelzens aus dem Schmelzgefäß abgezogen wird. Solche Verfahren sind erfindungsgemäß aus Gründen der Koaxialität beim Stromfluss bevorzugt.

Das in dem Verfahren umzuschmelzende Metall bzw. die umzuschmelzenden Metalllegierung ist vorzugsweise ausgewählt aus Stählen (hoch- oder niedrig-legiert), Superlegierungen und Nickel-Basis-Legierungen.

In einer bevorzugten Ausführungsform des erfindungsgemäßen Verfahrens wird die ermittelte Position oder Höhe der Schlackenzone mit einer Sollposition bzw. Sollhöhe verglichen und im Falle einer Abweichung der Position bzw. Höhe der Schlackenzone von der Sollposition bzw. Sollhöhe eine Beeinflussung der Position bzw. Höhe der Schlackenzone vorgenommen. Gleiches gilt insbesondere auch für die Eintauchtiefe der Elektrode in die Schlackenzone.

Die obere Schlackenzone befindet sich in etwa 100 bis 600 mm, vorzugsweise 200 bis 400 mm, bevorzugt etwa 300 mm unterhalb der oberen Schmelzgefäßkante. Die Zahlen können je nach Schmelzgefäß- und Elektrodendurchmesser etwas variieren, da die Abstrahlung nach oben berücksichtigt werden muss. Die "Schlackenzone" ist der Bereich des Schmelzraums, der während des Betriebs mit Schlacke befüllt ist. Sie befindet sich zwischen der Grenzfläche Metallbad/Schlacke und Schlacke/Gasphase. Die Schlackenzone ist in Position und Höhe veränderlich. Die "Schlackenhöhe" ist der vertikale Abstand zwischen den beiden genannten Grenzflächen und zwar dort, wo dieser Abstand am größten ist. Da die erfindungsgemäß erstellte Wärmebilanz eine im Vergleich zu anderen Verfahren sehr genaue Bestimmung von Position und Höhe der Schlackenzone zulässt, kann mit Schlackenhöhen im Bereich von 50 bis 500 mm, insbesondere von 75 mm bis 400 mm oder von 100 mm bis 300 mm gearbeitet werden. Insbesondere besteht nicht die Gefahr, dass die Schlackenhöhe einen zu niedrigen Wert annimmt. Eine minimale Schlackenhöhe sollte nicht unterschritten werden, um einen ausreichenden Widerstand zu erzeugen und damit der Stromverbrauch wirtschaftlich bleibt. Wird die Schlackenhöhe zu klein, kann Schlacke nachdosiert werden. Mit abnehmender Schlackenhöhe und damit einhergehendem geringeren Wärmeinhalt der Schlacke und größer werdenden elektrischen Strömen steigt das Durchbruchrisiko der Schlacke bzw. das Risiko von Metallausläufern. Die genaue Kontrolle der Schlackenzone ist für das Verfahren somit von besonderer Bedeutung.

Vorzugsweise wird im Falle einer Abweichung der Position der Schlackenzone nach unten eine Verlangsamung des Abziehens des Ingots aus dem Schmelzgefäß veranlasst. Erfindungsgemäß bevorzugt erfolgt in dem Verfahren keine Anpassung der Kühlmittelmenge bzw. des Kühlmitteldurchflusses. Eine Variation dieser Parameter würde zu einer Änderung der Form des flüssigen Metallbades führen. Die Badform und die Badhöhe soll aber erfindungsgemäß bevorzugt möglichst konstant gehalten werden. Die Regelung der Badhöhe erfolgt über den Leistungseintrag (Schmelzenergie zum Schmelzen der Elektrode). Dabei wird die Schmelzrate vorzugsweise im Wesentlichen konstant gehalten. Mit anderen Worten kann zwar die Schmelzrate über den Leistungseintrag geregelt werden, erfindungsgemäß bevorzugt ist aber eine konstante Schmelzrate, um ein konstant flaches Metallbad zu erzielen.

Das Schlackenmaterial ist erfindungsgemäß bevorzugt ausgewählt aus der Gruppe bestehend aus Calciumfluorid, Calciumoxid, Magnesiumoxid, Aluminiumoxid, Siliciumdioxid und Mischungen daraus. Dem Schlackenmaterial können gegebenenfalls geringe Mengen an Titanoxid bzw. Suboxiden des Titans, Boroxid, Lanthanoxid oder anderen Seltenerdoxiden zugesetzt werden. Geringe Mengen sind insbesondere Mengen von weniger als 10 Gew.-%, bevorzugt weniger als 5 Gew.-% bezogen auf die Gesamtmenge des Schlackenmaterials zu Beginn des Verfahrens.

Im Falle einer Abweichung der Position der Schlackenzone nach oben erfolgt eine Beschleunigung des Abziehens des Ingots aus dem Schmelzgefäß. Aufgrund der während des Verfahrens stattfindenden Temperaturmessung bzw. Erstellen der Wärmebilanz über die Messeinrichtungen ist es möglich, flexibel auf den Zustand der Schlackenzone zu reagieren.

Der mit dem erfindungsgemäßen Verfahren hergestellte Ingot weist in einer bevorzugten Ausführungsform einen Querschnittsdurchmesser von mehr als 600 mm, insbesondere mehr als 700 mm oder mehr als 800 mm auf. Mit dem erfindungsgemäßen Verfahren können im Vergleich zum Stranggießen besonders große Ingotdurchmesser erzielt werden.

Es ist ein Vorteil des erfindungsgemäßen Verfahrens, dass mit einem verhältnismäßig flachen Metallbad gearbeitet werden kann. Dies wird durch die verbesserte Kontrolle der Grenzflächen Ingot/Metallbad und Metallbad/Schlacke ermöglicht. Die "Badtiefe" ist der vertikale Abstand zwischen den genannten Grenzflächen und zwar dort, wo dieser Abstand am größten ist. Dies ist in der Regel in der Mitte des Schmelzraums. Die Badtiefe beträgt vorzugsweise höchstens 2 x D, insbesondere höchstens 1,5 x D oder höchstens 1 x D (D = Querschnittsdurchmesser des hergestellten Ingots ohne Schlackenhaut in Millimetern). Die Badtiefe sollte allerdings vorzugsweise einen Wert von wenigstens 0,1 x D, mehr bevorzugt wenigstens 0,2 x D oder wenigstens 0,25 x D nicht unterschreiten. Die Einhaltung einer vorteilhaften Badtiefe vermeidet Fehler im Ingot. Diese Badtiefen sind verhältnismäßig klein. Insbesondere im Strangguss stellen sich aufgrund der dort verwendeten hohen Gießraten deutlich größere Badtiefen ein. Im Gegensatz dazu ist die Zufuhr flüssigen Metalls in Gestalt der Schmelzrate in dem erfindungsgemäßen Verfahren gering. In einer bevorzugten Ausführungsform überschreitet die Schmelzrate in kg/h in dem erfindungsgemäßen Verfahren nicht den Wert von 2,5 * D, bevorzugt 2,0 * D und besonders bevorzugt 1,5 * D oder 1,0 * D. Beispiel: bei Querschnittsdurchmesser des Ingots D = 800 mm, beträgt die Schmelzrate maximal 2,5 * 800 = 2000 kg/h. Durch diese geringe Schmelzrate wird die vorteilhafte geringe Badtiefe und die gewünschte Qualität des Ingots erreicht. Die Schmelzrate kann leicht durch Wiegen der Elektrode gemessen werden.

Aufgrund der, insbesondere im Vergleich zu der Gießrate beim Stranggießen, sehr geringen Schmelzrate im erfindungsgemäßen Verfahren, bildet sich eine sogenannte "Schlackenhaut" auf dem hergestellten Ingot aus. Diese Schlackenhaut ist eine Schicht aus erstarrter Schlacke, die sich außen auf dem hergestellten Ingot befindet. Somit sind Schmelze und hergestellter Ingot im erfindungsgemäßen Verfahren nicht in Kontakt mit der Wand des Schmelzgefäßes. Die Schlackenhaut beeinflusst die Wärmeabfuhr. Die erfindungsgemäß erstellte Wärmebilanz erlaubt auch Aussagen zu der Dicke dieser Schlackenhaut.

Die mittlere Abzugs- bzw. Hebegeschwindigkeiten betragen in dem erfindungsgemäßen Verfahren vorzugsweise maximal 10 mm/min, maximal 8 mm/min und besonders bevorzugt maximal 5 mm/min betragen. Sie betragen insbesondere wenigstens 0,1 mm/min, bevorzugt wenigstens 0,5 mm/min. Je größer die Abmessungen werden, desto geringer werden die Abzugs- bzw. Hebegeschwindigkeiten. In einer bevorzugten Ausführungsform beträgt das Produkt aus Abzugs- bzw. Hebegeschwindigkeit mit dem Innendurchmesser des Schmelzgefäßes wenigstens 1000 und höchstens 5000 mm²/min, oder von 2000 bis 3500 mm²/min. So hat es sich beispielsweise als vorteilhaft erwiesen, bei einem Tiegeldurchmesser von 1000 mm mit einer Geschwindigkeit von 3 mm/min abzuziehen (3 mm/min*1000 mm = 3000 mm²/min).

Der Innendurchmesser des Schmelzgefäßes beträgt erfindungsgemäß bevorzugt wenigstens 500 mm, insbesondere wenigstens 800 mm oder wenigstens 1000 mm. In bevorzugten Ausführungsformen beträgt dieser Durchmesser höchstens 4000 mm oder höchstens 3000 mm. Gerade bei größeren Durchmessern ist das erfindungsgemäße Verfahren vorteilhaft.

In einer bevorzugten Ausführungsform werden im Verfahren wenigstens zwei, wenigstens drei oder wenigstens vier Elektroden eingesetzt. Dies hat den Vorteil, dass bei Tausch einer der Elektroden, die anderen weiter betrieben werden können. Das erfindungsgemäße Verfahren kann dann auch zur Positionierung und Auswahl der Elektroden eingesetzt werden, was einen bedeutenden Vorteil darstellt.

Wenn in dieser Beschreibung der Begriff "Metall" verwendet wird, so schließt dieser auch Metalllegierungen ein.

Zusammengefasst ermöglicht das erfindungsgemäße Verfahren die Durchführung eines, mehrerer oder aller der nachfolgend aufgezeigten Schritte:
- Erkennen von Position und Höhe der Schlackenzone,
- Starten des Ingotabzugs bei einer vorbestimmten Position der Schlackenzone (der langsam wachsende Block schiebt die Schlackenzone vor sich her nach oben),
- Optimieren des Energieeintrags beim Elektrodenwechsel um die Dicke der Schlackenhaut konstant zu halten (beim Elektrodenwechsel kann die Überhöhung an Leistungseinbringung bei der neuen Elektrode begrenzt werden anhand der Wärmelast in dem Schmelzgefäß),
- Überwachen der Schlackenhöhe (Schlackenhöhe nimmt über den Prozess ab),
- Steuerung der Zugabe von Schlackenbestandteilen, z.B. Zugabe von oxidischen Bestandteilen bei höheren Temperaturen und/oder Zugabe von Flussspat bei niedrigeren Temperaturen, um die Viskosität der Schlacke zu beeinflussen,
- Schlackenhaut über Zugabe von Schlackenbestandteilen konstant halten (zur verbesserten Steuerung des Wärmehaushaltes),
- Überwachung der Randschale der Schlacke,
- Erkennen von Schlackenausläufern beim Schopfheizen,
- Vermeidung einer Schwächung der Randschale,
- Messung der Schlackenbewegung,
- Erzielen homogener Wärmelasten (z.B. über Steuerung der Eintauchtiefe der Elektrode),
- Regelung der Leistungseinbringung beim Schopfheizen in Abhängigkeit der abgeführten Wärmelast.

Durch die Möglichkeit des Erkennens von Schlackenausläufern und der entsprechenden Regelung der Leistungseinbringung wird ein effizientes und risikoarmes Schopfheizen möglich, wodurch die Qualität des hergestellten Ingots nochmals gesteigert werden kann. Es ist somit bevorzugt, dass das Verfahren dieser Erfindung einen Schritt des Schopfheizens aufweist.

Über die Anordnung der Messeinrichtungen und der Berechnung der Wärmelast über das Schmelzgefäß kann die verbleibende Wärme im Schmelzraum (bzw. Schmelzpool) errechnet werden und über veränderliche Prozessbedingungen (z.B. Eintauchtiefe der Schmelzelektrode in die Schlacke und/oder Leistungserhöhung zum Abschmelzen der Elektrode) die Schlackendicke an der Randschale (Schmelzgefäß/Schlacke) beeinflusst werden und ein optimaler Arbeitspunkt (maximale Wärmeabfuhr) ermittelt werden, ohne die Randschale der Schlacke zu schwächen. So werden ungewollte Schlackenausläufer vermieden. Wird die Randschale der Schlacke zu dick oder zu dünn, besteht die Gefahr von Schlackenausläufern

Weiterhin besteht die Möglichkeit über die genaue Erfassung der Schlackenzone auf die Trennstelle Schmelzzone und Schlackenzone die Abzugsgeschwindigkeit/Hebegeschwindigkeit einzustellen und eine Erhöhung des Freibordes (Schlackenzone oben und Schmelzgefäßoberkante) zuzulassen.

Erfindungsgemäß ist auch die Verwendung eines erfindungsgemäßen Schmelzgefäßes in einem Elektro-Schlacke-Umschmelzverfahren.

### Fiqurenbeschreibunq

Die Figuren stellen vereinfachte und nicht maßstabsgetreue Zeichnungen dar. Es zeigen:
- **FIG.1**: Eine Schnittansicht eines Schmelzgefäßes aus dem Stand der Technik.
- **FIG.2**: Eine Schnittansicht der Wandungen eines erfindungsgemäßen Schmelzgefäßes.
- **FIG.3**: Vergrößerte Schnittansicht eines Teils einer Innenwand eines erfindungsgemäßen Schmelzgefäßes.
- **FIG.4**: Eine Schnittansicht eines erfindungsgemäßen Schmelzgefäßes.
- **FIG.5**: Drei Diagramme der gemessenen Temperatur nahe dem Schmelzraum (A), in größerem Abstand zum Schmelzraum (B) und der Wärmestromdichte (C).

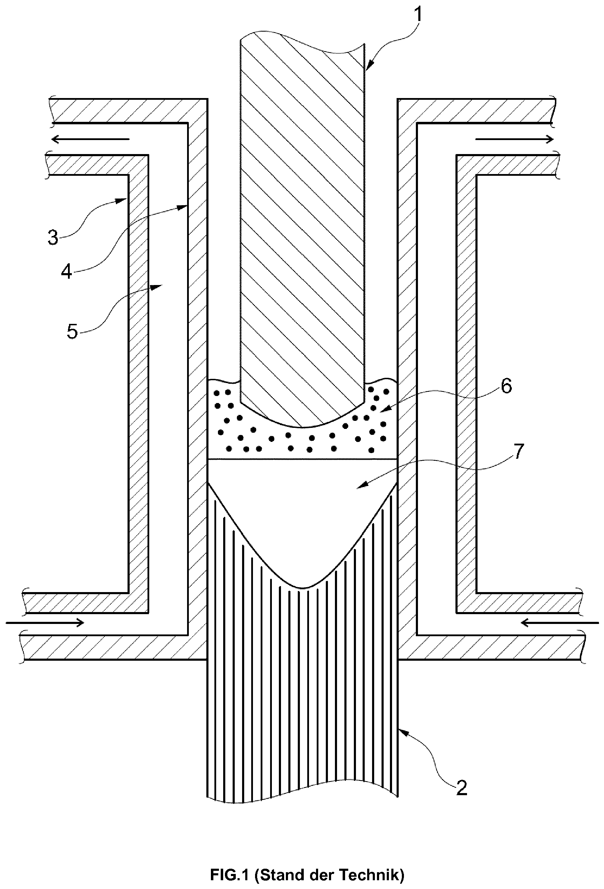

Figur 1 zeigt die wesentlichen Elemente eines Schmelzgefäßes für Elektro-Schlacke-Umschmelzverfahren, wie es auch im Stand der Technik zum Einsatz kommt. Das Schmelzgefäß ist in einer vertikalen Schnittansicht dargestellt. Das Gefäß ist als Kokille ausgestaltet und weist eine Außenwand 3, eine Innenwand 4 und einen zwischen der Außenwand 3 und der Innenwand 4 angeordneten Kühlmittelkanal 5 auf. Durch den Kühlmittelkanal 5 strömt Kühlmittel, insbesondere Wasser, vorzugsweise von unten nach oben durch den Kühlmittelkanal 5 (symbolisiert durch die Pfeile). In dem Schmelzgefäß wird ein Elektro-Schlacke-Umschmelzverfahren durchgeführt, in dem eine Elektrode 1 von oben in das Schmelzgefäß eingeführt und mit der Spitze in eine Schlackenzone 6 eingetaucht ist. Vermittelt durch Stromfluss heizt sich die Schlackenzone 6 wegen ihres hohen elektrischen Widerstandes stark auf und schmilzt die Spitze der Elektrode 1, so dass geschmolzenes Metall durch die Schlackenzone 6 hindurch tritt und sich als flüssiges Metall bzw. flüssige Metalllegierung 7 in dem Schmelzgefäß sammelt, bevor es zum Ingot 2 erstarrt. Der Ingot 2 kann nach unten aus dem Schmelzgefäß abgezogen beziehungsweise das Schmelzgefäß nach oben bewegt werden. Die Elektrode 1 kann von oben in das Schmelzgefäß nach geführt werden. Die in der Figur 1 gezeigten Merkmale finden sich vorzugsweise auch in dem Schmelzgefäß bzw. Verfahren dieser Erfindung.

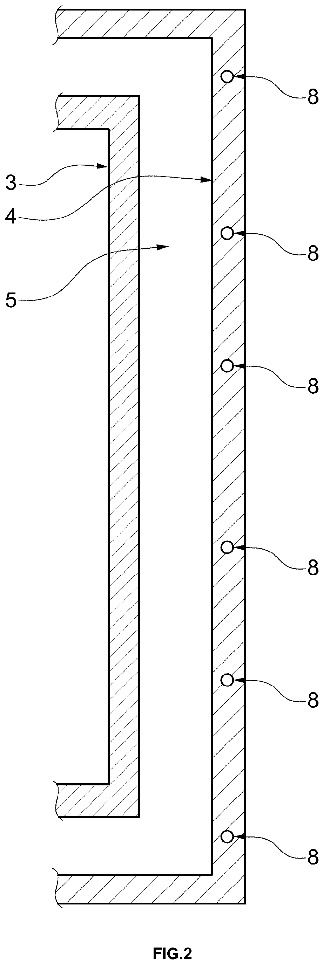

Figur 2 zeigt eine vertikale Schnittansicht durch die Wandungen eines erfindungsgemäßen Schmelzgefäßes, das eine Außenwand 3, eine Innenwand 4 und einen zwischen Außenwand 3 und Innenwand 4 angeordneten Kühlmittelkanal 5 aufweist. In der Innenwand 4 ist eine Mehrzahl von Messeinrichtungen 8 in unterschiedlicher Höhe, nämlich in einer vertikalen Reihe parallel zur Grenzfläche der Innenwand zum Schmelzraum, angeordnet.

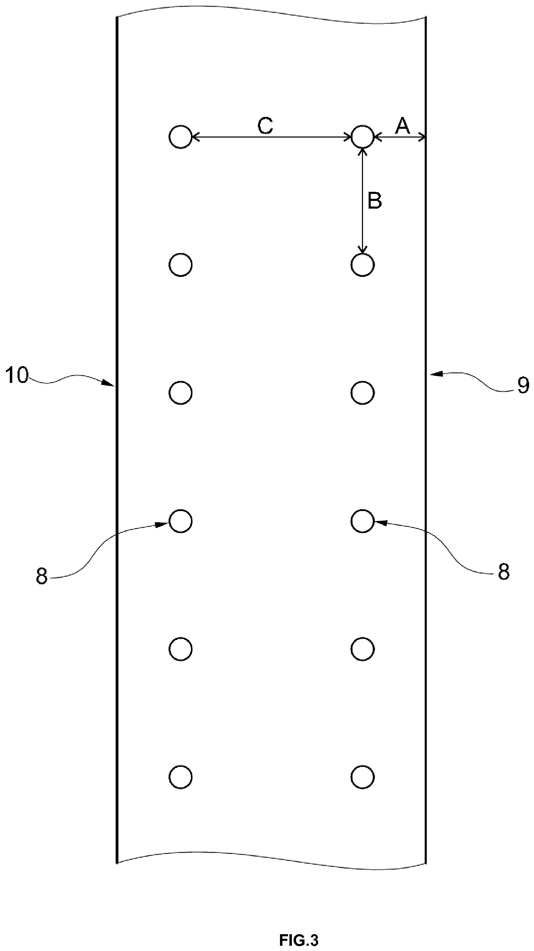

Figur 3 zeigt eine im Vergleich zu Figur 2 vergrößerte vertikale Schnittansicht durch einen Teil einer Innenwand eines erfindungsgemäßen Schmelzgefäßes. Die hier gezeigte Innenwand eines erfindungsgemäßen Schmelzgefäßes weist eine Vielzahl von Messeinrichtungen 8 auf. Die Messeinrichtungen sind in Messgruppen angeordnet, wobei die Messeinrichtungen 8 innerhalb einer Messgruppe einen im Wesentlichen gleichen Abstand zur Grenzfläche 9 zwischen Innenwand und Schmelzraum aufweisen. Eine hier gezeigte erste Messgruppe weist Messeinrichtungen 8 auf, die einen Abstand A zur Grenzfläche 9 zwischen Innenwand und Schmelzraum haben. Der Abstand dieser ersten Messgruppe zu der Grenzfläche 9 zwischen Innenwand und Schmelzraum ist kleiner als der Abstand A+C einer zweiten Messgruppe zu derselben Grenzfläche.

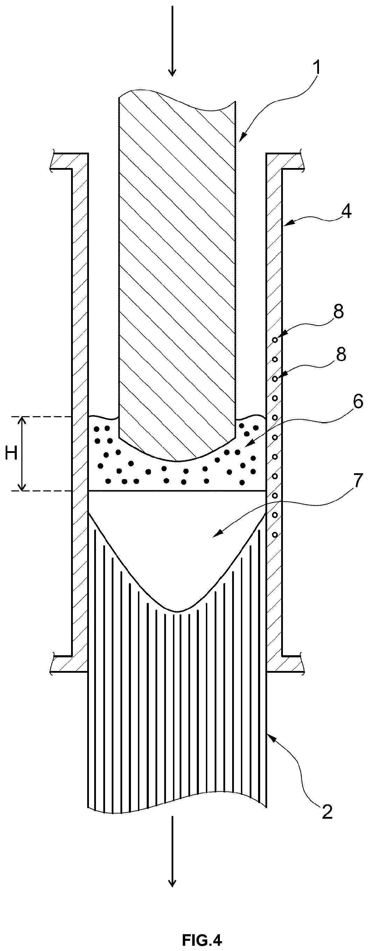

Figur 4 zeigt eine vertikale Schnittansicht eines erfindungsgemäßen Schmelzgefäßes in Form einer Kokille. Gezeigt sind die Elektrode 1 und Ingot 2 sowie Schlackenzone 6 und geschmolzenes Metall bzw. Metalllegierung 7. Ferner ist hier eine Mehrzahl von Messeinrichtungen 8 gezeigt, die in unterschiedlicher Höhe in der Innenwand 4 angeordnet sind und durch kleine Kreise dargestellt werden. Die Pfeile symbolisieren das Nachschieben der Elektrode 1 bzw. das Abziehen des Ingots 2 gemäß einer bevorzugten Ausführungsform. Außenwand und Kühlmittelkanal sind nicht gezeigt. Gezeigt ist eine Ausführungsform mit einer Messgruppe aus Messeinrichtungen 8 in einer vertikalen Reihe, um die Position und Höhe (H) der Schlackenzone 6 zu ermitteln. Es sind auch mehrere Reihen in einer Messgruppe denkbar und erfindungsgemäß. Die Reihen müssen nicht vertikal verlaufen, sondern können auch über das Schmelzgefäß verteilt mit gleichem Abstand zum Schmelzraum in unterschiedlichen Höhen angeordnet sein.

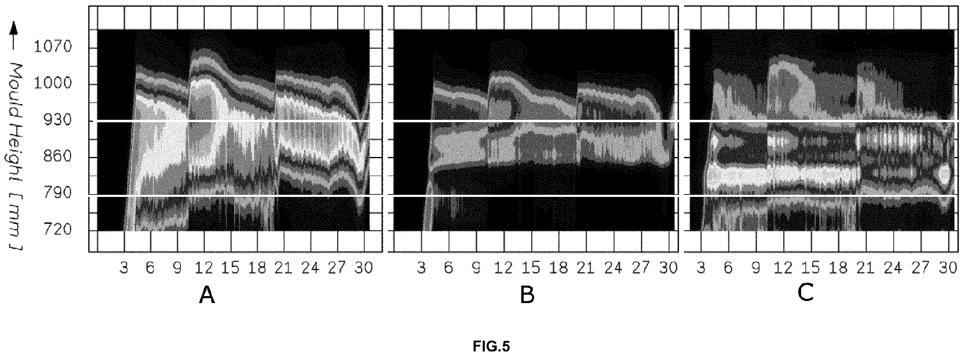

Figur 5 zeigt drei Diagramme, die von links nach rechts mit A, B bzw. C gekennzeichnet sind. Alle Diagramme zeigen auf der X-Achse die Zeit in Stunden und auf der Y-Achse die Höhe der Kokille in Millimetern. Alle drei Diagramme zeigen Messergebnisse aus einem einzigen Schmelzprozess. Diagramm A zeigt die gemessene Temperatur von Messeinrichtungen einer Messgruppe mit geringem Abstand zum Schmelzraum. Diagramm B zeigt die gemessene Temperatur einer Messgruppe mit etwas größerem Abstand zu dem Schmelzraum. Dabei zeigen die helleren Bereiche eine höhere Temperatur an als die dunkleren Bereiche. Im Gegensetz zu den Diagrammen A und B zeigt das Diagramm C die Wärmebilanz in Form von Wärmestromdichten über die Höhe der Kokille. Bereiche einer höheren Wärmestromdichte sind heller gezeigt als solche mit geringeren Wärmestromdichten. Die Wärmestromdichten des Diagrammes C wurden aus den Messwerten berechnet, die in den Diagrammen A und B gezeigt sind. Die beiden horizontal verlaufenden Linien zeigen die tatsächliche Lage der Schlackenzone an. Es ist erkennbar, dass die Temperaturmessungen der Diagramme A und B die höchste Temperatur nicht im Bereich der Schlackenzone zeigen, sondern suggerieren, dass die Schlackenzone höher liege als dies tatsächlich der Fall ist.

### Bezugszeichenliste

- 1: Elektrode
- 2: Ingot
- 3: Außenwand
- 4: Innenwand
- 5: Kühlmittelkanal
- 6: Schlackenzone
- 7: flüssiges Metall bzw. Metalllegierung
- 8: Messeinrichtungen
- 9: Grenzfläche zum Schmelzraum
- 10: Grenzfläche zum Kühlmittelkanal

## Patentansprüche

1. Verfahren zum Elektro-Schlacke-Umschmelzen von Metallen oder Metalllegierungen
in einem Schmelzgefäß mit wenigstens einer Innenwand (4) und einem durch die Innenwand (4) begrenzten Schmelzraum, so dass eine Grenzfläche (9) zwischen Innenwand (4) und Schmelzraum vorhanden ist,
mit den Schritten:
A. Bereitstellen wenigstens einer Elektrode (1) des zu schmelzenden Metalls oder der zu schmelzenden Metalllegierung in dem Schmelzgefäß,
B. Bereitstellen von Schlacke in dem Schmelzgefäß,
C. Schmelzen der Elektrode (1), so dass das geschmolzene Metall bzw. die Metalllegierung durch eine Schlackenzone (6) hindurch tritt und zu einem Ingot (2) erstarrt,
**dadurch gekennzeichnet, dass**
das Schmelzgefäß Messeinrichtungen (8) zum Messen der Temperatur aufweist und die Messeinrichtungen (8) in wenigstens zwei Messgruppen angeordnet sind,
wobei die Messeinrichtungen (8) innerhalb einer Messgruppe einen gleichen Abstand zur Grenzfläche (9) zwischen Innenwand (4) und Schmelzraum aufweisen
und sich der Abstand zur Grenzfläche (9) zwischen Innenwand (4) und Schmelzraum zwischen den Messeinrichtungen (8) verschiedener Messgruppen unterscheidet,
und Messeinrichtungen (8) innerhalb einer Messgruppe in unterschiedlicher Höhe angeordnet sind,
das Schmelzgefäß eine Außenwand (3) und einen zwischen Außenwand (3) und Innenwand (4) verlaufenden Kühlmittelkanal (5) aufweist und
diejenige Messgruppe, die im Vergleich zu anderen Messgruppen den geringsten Abstand zu der Grenzfläche Innenwand/Schmelzraum aufweist, in der Mitte der Innenwand (4) angeordnet ist
wobei mit Hilfe der über die Messeinrichtungen (8) gewonnenen Informationeneine Wärmebilanz erstellt wird.

2. Verfahren nach Anspruch 1, wobei der Ingot (2) während des Schmelzens aus dem Schmelzgefäß abgezogen wird und/oder das Schmelzgefäß in Relativbewegung zum wachsenden Ingot (2) angehoben wird.

3. Verfahren nach Anspruch 2, wobei die Abzugs- bzw. Hebegeschwindigkeit wenigstens 0,01 cm/min und höchstens 1,0 cm/min beträgt.

4. Verfahren nach Anspruch 2 oder 3, wobei das Produkt aus Abzugs- bzw. Hebegeschwindigkeit mit dem Innendurchmesser des Schmelzgefäßes wenigstens 1000 und höchstens 5000 mm²/min beträgt.

5. Verfahren nach wenigstens einem der vorhergehenden Ansprüche, wobei während des Schmelzens die Position der Schlackenzone (6) im Schmelzgefäß über Messeinrichtungen (8) ermittelt wird.

6. Verfahren nach Anspruch 5, wobei während des Schmelzens die Höhe der Schlackenzone (6) im Schmelzgefäß über Messeinrichtungen (8) ermittelt wird.

7. Verfahren nach Anspruch 5 oder 6, wobei die ermittelte Position der Schlackenzone (6) mit einer Sollposition verglichen wird und im Falle einer Abweichung der Position der Schlackenzone (6) von der Sollposition eine Beeinflussung der Position der Schlackenzone (6) erfolgt.

8. Verfahren nach Anspruch 7, wobei im Falle einer Abweichung der Position der Schlackenzone (6) nach unten eine Erhöhung der Schmelzrate und/oder eine Verlangsamung des Abziehens des Ingots (2) aus dem Schmelzgefäß bzw. des Anhebens des Schmelzgefäßes erfolgt.

9. Verfahren nach Anspruch 7 oder 8, wobei im Falle einer Abweichung der Position der Schlackenzone (6) nach oben eine Reduktion der Schmelzrate und/oder eine Beschleunigung des Abziehens des Ingots (2) aus dem Schmelzgefäß bzw. des Anhebens des Schmelzgefäßes erfolgt.

10. Verfahren nach wenigstens einem der Ansprüche 6 bis 9, wobei die Schlackenhöhe mit einer Sollhöhe verglichen wird und im Falle einer Abweichung der Höhe der Schlackenzone nach unten, Schlackenmaterial nachdosiert wird.

11. Verfahren nach Anspruch 5, wobei die Eintauchtiefe der Elektrode (1) in die Schlackenzone (6) und/oder die Menge der Schlackendosierung abhängig von der Wärmebilanz korrigiert wird.

12. Verfahren nach wenigstens einem der vorhergehenden Ansprüche, wobei der vertikale Abstand zwischen den Grenzflächen Ingot/Metallbad und Metallbad/Schlacke höchstens das Doppelte des Querschnittsdurchmessers des hergestellten Ingots beträgt.

13. Verfahren nach wenigstens einem der vorhergehenden Ansprüche, wobei die Schmelzrate den Wert von 2,5 kg/h multipliziert mit dem Querschnittsdurchmesser des hergestellten Ingots in Millimetern nicht übersteigt.

14. Schmelzgefäß zum Elektro-Schlacke-Umschmelzen von Metallen oder Metalllegierungen, mit wenigstens einer Innenwand (4) und einem durch die Innenwand (4) begrenzten Schmelzraum, so dass eine Grenzfläche (9) zwischen Innenwand (4) und Schmelzraum vorhanden ist, **dadurch gekennzeichnet, dass**
das Schmelzgefäß Messeinrichtungen (8) zum Messen der Temperatur aufweist und die Messeinrichtungen (8) in wenigstens zwei Messgruppen angeordnet sind,
wobei die Messeinrichtungen (8) innerhalb einer Messgruppe den gleichen Abstand zur Grenzfläche (9) zwischen Innenwand (4) und Schmelzraum aufweisen
und sich der Abstand zur Grenzfläche (9) zwischen Innenwand (4) und Schmelzraum zwischen den Messeinrichtungen (8) verschiedener Messgruppen unterscheidet,
und Messeinrichtungen (8) innerhalb einer Messgruppe in unterschiedlicher Höhe angeordnet sind,
das Schmelzgefäß eine Außenwand (3) und einen zwischen Außenwand (3) und Innenwand (4) verlaufenden Kühlmittelkanal (5) aufweist und
diejenige Messgruppe, die im Vergleich zu anderen Messgruppen den geringsten Abstand zu der Grenzfläche Innenwand/Schmelzraum aufweist, in der Mitte der Innenwand (4) angeordnet ist.

15. Schmelzgefäß nach Anspruch 14, wobei die Messeinrichtungen (8) in der Innenwand (4) des Schmelzgefäßes angeordnet sind.

16. Schmelzgefäß nach Anspruch 14 oder 15, wobei die Messeinrichtungen (8) Thermoelemente sind.

17. Schmelzgefäß nach wenigstens einem der vorhergehenden Ansprüche 14 bis 16, wobei eine erste Messgruppe einen Abstand A zu der Grenzfläche (9) zwischen Innenwand (4) und Schmelzraum hat, der kleiner ist als der Abstand A+C einer zweiten Messgruppe zu derselben Grenzfläche.

18. Schmelzgefäß nach wenigstens einem der vorhergehenden Ansprüche 14 bis 17, wobei der Abstand von benachbarten Messeinrichtungen innerhalb einer Messgruppe dort minimal ist, wo im Betrieb des Schmelzgefäßes die Grenzfläche Metallbad/Schlacke und/oder Schlacke/Gasphase angeordnet ist.

19. Schmelzgefäß nach wenigstens einem der vorhergehenden Ansprüche 14 bis 18, wobei ein horizontaler Abstand C zwischen den Messeinrichtungen (8) einer ersten Messgruppe zu den Messeinrichtungen (8) einer zweiten Messgruppe wenigstens 3 mm beträgt.

20. Schmelzgefäß nach wenigstens einem der vorhergehenden Ansprüche 14 bis 19, wobei zu jeder Messeinrichtung einer Messgruppe eine korrespondierende Messeinrichtung einer anderen Messgruppe auf der gleichen Höhe vorgesehen ist.

21. Schmelzgefäß nach wenigstens einem der vorhergehenden Ansprüche 14 bis 20, wobei die Zahl der Messeinrichtungen je Messgruppe wenigstens fünf beträgt.

22. Verwendung eines Schmelzgefäßes nach einem der Ansprüche 14 bis 21 in einem Elektro-Schlacke-Umschmelzverfahren.

## Claims

1. A method for electro-slag remelting of metals or metal alloys
in a melting vessel having at least one inner wall (4) and a melting chamber bounded by the inner wall (4) so that there is a boundary surface (9) between inner wall (4) and melting chamber,
with the steps:
A. Providing in the melting vessel at least one electrode (1) of the metal or metal alloy to be melted,
B. Providing slag in the melting vessel,
C. Melting the electrode (1) so that the molten metal or metal alloy passes through a slag zone (6) and solidifies into an ingot (2),
**characterized in that**
the melting vessel has measuring devices (8) for measuring the temperature and the measuring devices (8) are arranged in at least two measuring groups,
wherein the measuring devices (8) within a measuring group have a same distance to the boundary surface (9) between the inner wall (4) and the melting chamber,
and the distance to the boundary surface (9) between the inner wall (4) and the melting chamber differs between the measuring devices (8) of different measuring groups,
and measuring devices (8) within a measuring group are arranged at different heights,
the melting vessel has an outer wall (3) and a coolant channel (5) extending between the outer wall (3) and the inner wall (4), and
the measuring group which, in comparison with other measuring groups, has the smallest distance to the inner wall/melting chamber boundary surface is arranged in the middle of the inner wall (4),
wherein a heat balance is established by means of the information obtained via the measuring devices (8).

2. The method according to claim 1, wherein the ingot (2) is withdrawn from the melting vessel during the melting and/or the melting vessel is lifted in relative movement to the growing ingot (2).

3. The method according to claim 2, wherein the withdrawal or lifting speed is at least 0.01 cm/min and at most 1.0 cm/min.

4. The method according to claim 2 or 3, wherein the product of withdrawal or lifting speed with the inner diameter of the melting vessel is at least 1000 and at most 5000 mm²/min.

5. The method according to at least one of the preceding claims, wherein the position of the slag zone (6) in the melting vessel is determined via measuring devices (8) during the melting.

6. The method according to claim 5, wherein the height of the slag zone (6) in the melting vessel is determined via measuring devices (8) during the melting.

7. The method according to claim 5 or 6, wherein the determined position of the slag zone (6) is compared with a target position and in the event of a deviation of the position of the slag zone (6) from the target position, influencing of the position of the slag zone (6) is performed.

8. The method according to claim 7, wherein in the event of a downward deviation of the position of the slag zone (6) an increase of the melting rate and/or a deceleration of the withdrawal of the ingot (2) from the melting vessel or of the lifting of the melting vessel is caused.

9. The method according to claim 7 or 8, wherein in the event of an upward deviation of the position of the slag zone (6) a decrease of the melting rate and/or an acceleration of the withdrawal of the ingot (2) from the melting vessel or of the lifting of the melting vessel is caused.

10. The method according to at least one of the claims 6 to 9, wherein the slag height is compared with a target height and in the event of a downward deviation of the height of the slag zone, slag material is re-dosed.

11. The method according to claim 5, wherein the immersion depth of the electrode (1) into the slag zone (6) and/or the amount of slag dosing is corrected depending on the heat balance.

12. The method according to at least one of the preceding claims, wherein the vertical distance between the ingot/metal bath and metal bath/slag boundary surfaces is at most twice the cross-sectional diameter of the ingot produced.

13. The method according to at least one of the preceding claims, wherein the melting rate does not exceed the value of 2.5 kg/h multiplied by the cross-sectional diameter in millimeters of the ingot produced.

14. A melting vessel for electro-slag remelting of metals or metal alloys, having at least one inner wall (4) and a melting chamber bounded by the inner wall (4) so that there is a boundary surface (9) between the inner wall (4) and the melting chamber, **characterized in that**
the melting vessel has measuring devices (8) for measuring the temperature and the measuring devices (8) are arranged in at least two measuring groups,
wherein the measuring devices (8) within a measuring group have the same distance to the boundary surface (9) between the inner wall (4) and the melting chamber,
and the distance to the boundary surface (9) between the inner wall (4) and the melting chamber differs between the measuring devices (8) of different measuring groups,
and measuring devices (8) within a measuring group are arranged at different heights,
the melting vessel has an outer wall (3) and a coolant channel (5) extending between outer wall (3) and inner wall (4), and
the measuring group which, in comparison with other measuring groups, has the smallest distance to the inner wall/melting chamber boundary surface is arranged in the middle of the inner wall (4).

15. The melting vessel according to Claim 14, wherein the measuring devices (8) are arranged in the inner wall (4) of the melting vessel.

16. The melting vessel according to claim 14 or 15, wherein the measuring devices (8) are thermocouples.

17. The melting vessel according to at least one of the preceding claims 14 to 16, wherein a first measuring group has a distance A to the boundary surface (9) between inner wall (4) and melting chamber which is smaller than the distance A+C of a second measuring group to the same boundary surface.

18. The melting vessel according to at least one of the preceding claims 14 to 17, wherein the distance of adjacent measuring devices within the same measuring group is minimal where, in operation of the melting vessel, the boundary surface metal bath/slag and/or slag/gas phase is arranged.

19. The melting vessel according to at least one of the preceding claims 14 to 18, wherein a horizontal distance C between the measuring devices (8) of a first measuring group to the measuring devices (8) of a second measuring group is at least 3 mm.

20. The melting vessel according to at least one of the preceding claims 14 to 19, wherein for each measuring device of the same measuring group a corresponding measuring device of another measuring group is provided at the same height.

21. The melting vessel according to at least one of the preceding claims 14 to 20, wherein the number of measuring devices per measuring group is at least five.

22. A use of a melting vessel according to one of claims 14 to 21 in an electro-slag remelting method.

## Revendications

1. Procédé de fusion sous laitier électroconducteur de métaux ou alliages métalliques
dans un récipient de fusion avec au moins une paroi intérieure (4) et un espace de fusion délimité par la paroi intérieure (4), de sorte qu'une surface de délimitation (9) est présente entre la paroi intérieure (4) et l'espace de fusion,
avec les étapes de :
A. mise à disposition d'au moins une électrode (1) du métal à fondre ou de l'alliage métallique à fondre dans le récipient de fusion,
B. mise à disposition de laitier dans le récipient de fusion,
C. fusion de l'électrode (1), de sorte que le métal ou l'alliage métallique fondu passe à travers une zone de laitier (6) et se fige en un lingot (2),
**caractérisé en ce que**
le récipient de fusion présente des dispositifs de mesure (8) pour la mesure de la température et les dispositifs de mesure (8) sont agencés en au moins deux groupes de mesure,
dans lequel les dispositifs de mesure (8) présentent, à l'intérieur d'un groupe de mesure, une même distance par rapport à la surface de délimitation (9) entre paroi intérieure (4) et espace de fusion
et la distance par rapport à la surface de délimitation (9) entre paroi intérieure (4) et espace de fusion se distingue entre les dispositifs de mesure (8) de différents groupes de mesure,
et des dispositifs de mesure (8) sont agencés à l'intérieur d'un groupe de mesure à différentes hauteurs,
le récipient de fusion présente une paroi extérieure (3) et un canal de réfrigérant (5) s'étendant entre paroi extérieure (3) et paroi intérieure (4) et
le groupe de mesure, qui présente la plus petite distance par rapport à la surface de délimitation paroi intérieure/espace de fusion comparée à d'autres groupes de mesure, est agencé au milieu de la paroi intérieure (4)
dans lequel à l'aide des informations obtenues par le biais des dispositifs de mesure (8), un bilan thermique est établi.

2. Procédé selon la revendication 1, dans lequel le lingot (2) est retiré du récipient de fusion pendant la fusion et/ou le récipient de fusion est soulevé en mouvement relatif par rapport au lingot (2) croissant.

3. Procédé selon la revendication 2, dans lequel la vitesse de retrait ou de soulèvement est au minimum de 0,01 cm/min et au maximum de 1,0 cm/min.

4. Procédé selon la revendication 2 ou 3, dans lequel le produit de la vitesse de retrait ou de soulèvement avec le diamètre intérieur du récipient de fusion est au minimum de 1000 et au maximum de 5 000 mm²/min.

5. Procédé selon au moins l'une quelconque des revendications précédentes, dans lequel la position de la zone de laitier (6) dans le récipient de fusion est déterminée pendant la fusion par le biais de dispositifs de mesure (8).

6. Procédé selon la revendication 5, dans lequel la hauteur de la zone de laitier (6) dans le récipient de fusion est déterminée pendant la fusion par le biais de dispositifs de mesure (8).

7. Procédé selon la revendication 5 ou 6, dans lequel la position déterminée de la zone de laitier (6) est comparée avec une position de consigne et dans le cas d'un écart de la position de la zone de laitier (6) de la position de consigne, il s'ensuit un effet sur la position de la zone de laitier (6).

8. Procédé selon la revendication 7, dans lequel dans le cas d'un écart de la position de la zone de laitier (6) vers le bas, il s'ensuit une augmentation du taux de fusion et/ou un ralentissement du retrait du lingot (2) du récipient de fusion ou du soulèvement du récipient de fusion.

9. Procédé selon la revendication 7 ou 8, dans lequel dans le cas d'un écart de la position de la zone de laitier (6) vers le haut, il s'ensuit une réduction du taux de fusion et/ou une accélération du retrait du lingot (2) du récipient de fusion ou du soulèvement du récipient de fusion.

10. Procédé selon au moins l'une quelconque des revendications 6 à 9, dans lequel la hauteur de laitier est comparée avec une hauteur de consigne et dans le cas d'un écart de la hauteur de la zone de laitier vers le bas, du matériau de laitier est rajouté.

11. Procédé selon la revendication 5, dans lequel la profondeur d'immersion de l'électrode (1) dans la zone de laitier (6) et/ou la quantité du dosage de laitier est corrigée en fonction du bilan thermique.

12. Procédé selon au moins l'une quelconque des revendications précédentes, dans lequel la distance verticale entre les surfaces de délimitation lingot/bain métallique et bain métallique/laitier est au maximum le double du diamètre en coupe transversale du lingot fabriqué.

13. Procédé selon au moins l'une quelconque des revendications précédentes, dans lequel le taux de fusion ne dépasse pas la valeur de 2,5 kg/h multipliée par le diamètre en coupe transversale du lingot fabriqué en millimètres.

14. Récipient de fusion pour la fusion sous laitier électroconducteur de métaux ou alliages métalliques, avec au moins une paroi intérieure (4) et un espace de fusion délimité par la paroi intérieure (4), de sorte qu'une surface de délimitation (9) est présente entre paroi intérieure (4) et espace de fusion, **caractérisé en ce que**
le récipient de fusion présente des dispositifs de mesure (8) pour la mesure de la température et les dispositifs de mesure (8) sont agencés en au moins deux groupes de mesure,
dans lequel les dispositifs de mesure (8) présentent, à l'intérieur d'un groupe de mesure, la même distance par rapport à la surface de délimitation (9) entre paroi intérieure (4) et espace de fusion
et la distance par rapport à la surface de délimitation (9) entre paroi intérieure (4) et espace de fusion se distingue entre les dispositifs de mesure (8) de différents groupes de mesure,
et des dispositifs de mesure (8) sont agencés à l'intérieur d'un groupe de mesure à différentes hauteurs,
le récipient de fusion présente une paroi extérieure (3) et un canal de réfrigérant (5) s'étendant entre paroi extérieure (3) et paroi intérieure (4) et
le groupe de mesure, qui présente la plus petite distance par rapport à la surface de délimitation paroi intérieure/espace de fusion comparée à d'autres groupes de mesure, est agencé au milieu de la paroi intérieure (4).

15. Récipient de fusion selon la revendication 14, dans lequel les dispositifs de mesure (8) sont agencés dans la paroi intérieure (4) du récipient de fusion.

16. Récipient de fusion selon la revendication 14 ou 15, dans lequel les dispositifs de mesure (8) sont des thermocouples.

17. Récipient de fusion selon au moins l'une quelconque des revendications précédentes 14 à 16, dans lequel un premier groupe de mesure a une distance A par rapport à la surface de délimitation (9) entre paroi intérieure (4) et espace de fusion, qui est inférieure à la distance A+C d'un deuxième groupe de mesure par rapport à la même surface de délimitation.

18. Récipient de fusion selon au moins l'une quelconque des revendications précédentes 14 à 17, dans lequel la distance de dispositifs de mesure adjacents à l'intérieur d'un groupe de mesure est minimale, là où la surface de délimitation bain métallique/laitier et/ou laitier/phase gazeuse est agencée lors du fonctionnement du récipient de fusion.

19. Récipient de fusion selon au moins l'une quelconque des revendications précédentes 14 à 18, dans lequel une distance C horizontale entre les dispositifs de mesure (8) d'un premier groupe de mesure par rapport aux dispositifs de mesure (8) d'un deuxième groupe de mesure est d'au moins 3 mm.

20. Récipient de fusion selon au moins l'une quelconque des revendications précédentes 14 à 19, dans lequel un dispositif de mesure correspondant d'un autre groupe de mesure est prévu à la même hauteur pour chaque dispositif de mesure d'un groupe de mesure.

21. Récipient de fusion selon au moins l'une quelconque des revendications précédentes 14 à 20, dans lequel le nombre de dispositifs de mesure par groupe de mesure est d'au moins cinq.

22. Utilisation d'un récipient de fusion selon l'une quelconque des revendications 14 à 21 dans un procédé de fusion sous laitier électroconducteur.
